# EUROPEAN PATENT APPLICATION

(11) **EP 4 510 057 A1**
(43) Date of publication of application: **19.02.2025**
(21) Application number: 24191152.8
(22) Date of filing: 26.07.2024
(51) Int. Cl.: G06Q 10/0631, G06Q 10/1093

(54) **DOMAIN AGNOSTIC OPERATIONAL PLANNING SYSTEM AND METHOD**

(30) Priority: 16.08.2023 US 202318234646
(71) Applicant: Rockwell Collins, Inc., Cedar Rapids, IA 52498 (US)
(72) Inventor: BERGER, Andrew K., Houston, TX (US); HERTZ, Benjamin J., Cedar Rapids, IA (US)
(74) Representative: Dehns

(57) **Abstract**

An operational planning system and method for optimal assignment of resources to the completion of tasks includes a combination of software modules (310) and customizable plugins. A resource manager (402) assesses known resources to determine which resources are assignable to a set of tasks to be completed, and a task manager (406) determines which tasks are available for completion and prioritizes the valid tasks by resolving task dependencies. Customizable plugins determine cost factors for assigning each valid resource to each valid task, whether valid resources should continue their current task assignments and receive new assignments. Based on the assignment cost data, the customizable plugins ultimately determine an optimal assignment of valid resources to valid tasks (e.g., optimal in the sense of lowest cost and/or other desirable factors).

## Description

### BACKGROUND

Being able to optimally assign resources to the completion of tasks is commonly desirable across a variety of domains, and is generally implemented as an operational planning system. However, while planning systems may have similar functionalities across a variety of domains, most operational planning projects are developed and implemented from scratch and specific to their domain. There is currently no domain-independent standard paradigm or design around which projects may base their planning systems, often leading to sharded implementations of planning system functionalities and/or duplicated efforts.

### SUMMARY

In a first aspect, an operational planning system (OPS) for optimal assignment of resources to the completion of one or more tasks is disclosed. In embodiments, the OPS includes memory for storing encoded instructions and a processing environment (e.g., one or more processors, one or more cores) configurable via the encoded instructions. In embodiments, modules executable in the processing environment include non-customizable modules for resource and task management and customizable plugins adaptable to a particular task domain (e.g., military, commercial). For example, a resource manager monitors resource states from a set of known resources (e.g., assets deployable toward completion of a task, or achievement of particular objectives or task states necessary to completion of the task) and determines which resources are valid and assignable to a current set of tasks. A task manager monitors the states of current tasks and determines which tasks are valid and available for completion by the available resources. A hierarchical task module prioritizes the set of valid tasks by resolving any task dependencies therein. Customizable plugins include an assignment cost plugin, a resource selector plugin, and an assignment plugin. For example, the assignment cost plugin determines, based on the set of valid resources and the prioritized set of valid tasks, a cost factor associated with assigning each valid resource to each valid task. The resource selector reduces the set of valid resources to a set of selected resources by assigning resource instructions to each valid resource. The assignment plugin determines, based on the selected resources and assignment cost data, an optimal assignment of selected resources to valid assignable tasks, e.g., based on the lowest overall assignment cost and/or additional factors as desired.

In some embodiments, resource state data received by the resource manager includes attributes, capabilities, or properties of a given resource, positional data (e.g., relative to other resources or tasks), timing data, whether the resource is currently functional, and the capacity of a given resource to collaborate with other resources.

In some embodiments, the resource attributes, capabilities, or properties include: task objectives or task state effects/changes achievable by a resource; a frequency with which the effect or objective can be achieved, a probability that a resource will complete a task, or any other constraints upon a resource.

In some embodiments, timing data associated with a resource includes a remaining functional time or a remaining assignable time of the resource.

In some embodiments, task state data received and monitored by the task manager includes a capability of a task, any task dependencies associated with commencement or conclusion/completion of a task, positional data of the task (e.g., relative to other tasks or resources), timing data of the task, whether the task is required, or the capability for more than one resource to collaborate in performance or completion of the task.

In some embodiments, task dependencies include necessary states of a first task in order for a second task to be either attempted (commenced) or completed (concluded).

In some embodiments, task capabilities include any task state effects necessary for completion of a task, a frequency with which the task may be attempted and/or completed, a probability of the task being completed, or any other constraints on the task.

In some embodiments, assignment cost data includes: probability of completion of a valid resource by a selected task, capabilities (task states or resource attributes) associated with the performance of the selected task by the valid resource, timing data for the performance of the selected task by the valid resource, indicators of whether the valid resource can perform or complete the selected task, or rationales for why the valid resource would perform the selected task.

In some embodiments, assignment instructions from the resource selector include: instructing a resource to continue its current task assignment, instructing a resource to abort its current task assignment, or instructing a resource to accept a new task assignment.

In some embodiments, optimal assignment data provided by the assignment plugin includes: a mapping of selected resources to the hierarchical set of selected tasks, a list of assignable resources mappable to selected tasks, a list of selected tasks capable of accepting mapped resources, timing data for the completion of each selected task, probability data for the mapping of resources to tasks, or assignment cost data for possible assignments of resources to tasks.

In some embodiments, probability data includes a probability of completion of a selected task by its mapped resources, or a probability of completing all selected tasks.

In some embodiments, the resource selector is trained by artificial intelligence according to simulations of one or more tasks of the set of selected tasks.

In some embodiments, the assignment plugin determines an optimal mapping of resources to tasks by incorporating auction-type algorithms.

In a further aspect, a computer-assisted method for assignment of a set of resources for optimal completion of a set of tasks is also disclosed. In embodiments, the method includes receiving resource state data for a set of known resources. The method includes receiving task state data for a set of tasks to be completed by the set of known resources. The method includes selecting a set of valid assignable resources from the set of known resources. The method includes selecting a set of valid tasks available for completion by the valid resources. The method includes prioritizing the set of valid tasks by resolving any task dependencies therein. The method includes determining an assignment cost for each possible assignment of valid resources to valid tasks. The method includes determining a set of selected resources by providing assignment instructions to each prioritized valid resource. The method includes producing an optimal assignment of the set of selected resources to the set of selected tasks based on the assignment cost data.

In some embodiments, resource state data received by the resource manager includes attributes, capabilities, or properties of a given resource, positional data (e.g., relative to other resources or tasks), timing data, whether the resource is currently functional, and the capacity of a given resource to collaborate with other resources.

In some embodiments, the resource attributes, capabilities, or properties include: task objectives or task state effects/changes achievable by a resource; a frequency with which the effect or objective can be achieved, a probability that a resource will complete a task, or any other constraints upon a resource.

In some embodiments, task state data received and monitored by the task manager includes a capability of a task, any task dependencies associated with commencement or conclusion/completion of a task, positional data of the task (e.g., relative to other tasks or resources), timing data of the task, whether the task is required, or the capability for more than one resource to collaborate in performance or completion of the task.

In some embodiments, task capabilities include any task state effects necessary for completion of a task, a frequency with which the task may be attempted and/or completed, a probability of the task being completed, or any other constraints on the task.

In some embodiments, assignment cost data includes: probability of completion of a valid resource by a selected task, capabilities (task states or resource attributes) associated with the performance of the selected task by the valid resource, timing data for the performance of the selected task by the valid resource, indicators of whether the valid resource can perform or complete the selected task, or rationales for why the valid resource would perform the selected task.

In some embodiments, optimal assignment data provided by the assignment plugin includes: a mapping of selected resources to the hierarchical set of selected tasks, a list of assignable resources mappable to selected tasks, a list of selected tasks capable of accepting mapped resources, timing data for the completion of each selected task, probability data for the mapping of resources to tasks, or assignment cost data for possible assignments of resources to tasks.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a diagrammatic illustration of a military task domain according to example embodiments of this disclosure;
FIG. 2 is a diagrammatic illustration of a commercial task domain according to example embodiments of this disclosure;
FIG. 3 is a block diagram illustrating an operational planning system (OPS) according to example embodiments of this disclosure;
FIG. 4 is a block diagram illustrating components and operations of the operational planning system of FIG. 3;
FIG. 5 is a block diagram illustrating the components and operations of FIG. 4 applied to the military domain of FIG. 1;
and FIGS. 6A and 6B are flow diagrams illustrating a method for assigning a set of resources for optimal completion of a task or task set, in accordance with example embodiments of this disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Broadly speaking, embodiments of the inventive concepts disclosed herein are directed to a domain-agnostic or domain-independent operational planning system designed to assign a pool of available resources to a pool of tasks for completion optimally (e.g., at minimal possible cost) independent of the underlying motivating domain.

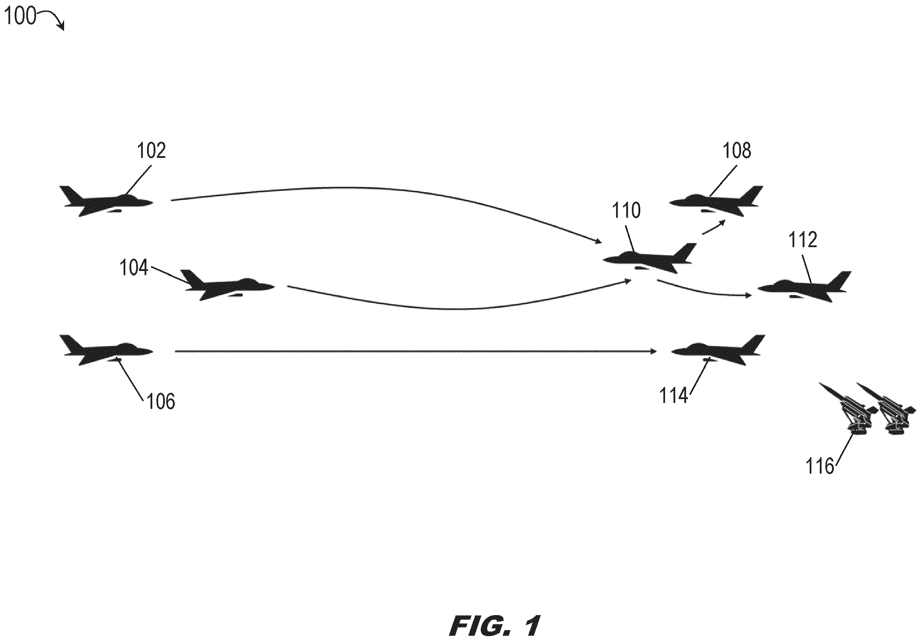

Referring now to FIG. 1, a military domain 100 is shown. The military domain 100 may include friendly aircraft 102, 104, 106; hostile aircraft 108, 110, 112, 114; and hostile ground-based weapons 116.

In embodiments, the military domain 100 may be associated with the completion or fulfillment of one or more tasks or goals (e.g., by a nation-state or military unit/s thereof) using any available resources, e.g., the friendly aircraft 102, 104, 106. For example, within the military domain 100 it may be necessary to engage each of the hostile aircraft 108, 110, 112, 114 within a predetermined time window (e.g., before any of the hostile aircraft encroach upon friendly territory or airspace. Further, the engagement of the hostile aircraft 108, 110, 112, 114 may be considered as a set of tasks (e.g., wherein engagement of each hostile aircraft comprises a task in itself), or as a single task (e.g., wherein the task is only determined complete or fulfilled once every hostile aircraft has been successfully engaged, with the engagement of each individual hostile aircraft providing an objective toward the fulfillment or completion of the overall task).

In embodiments, toward the fulfillment or completion of the above task (e.g., or task set) in the military domain 100, the friendly aircraft 102, 104, 106 may be available for assignment. For example, many assignments of the friendly aircraft 102, 104, 106 may be possible, a subset of the set of possible assignments may be feasible (based on, e.g., the distance between each friendly aircraft and the hostile aircraft 108, 110, 112, 114; the fuel capacity and/or effective operating range of each friendly aircraft), and one or more feasible assignments may be optimal. In embodiments, an optimal assignment of the friendly aircraft 102, 104, 106 for engagement of the hostile aircraft 108, 110, 112, 114 may be that assignment or assignments associated with the lowest possible cost, e.g., minimal loss of personnel, minimal loss of aircraft or other equipment, minimal fuel consumption, minimal elapsed time. Determination of the cost associated with a particular assignment of one or more resources to a particular task may be based on a predetermined set of parameters.

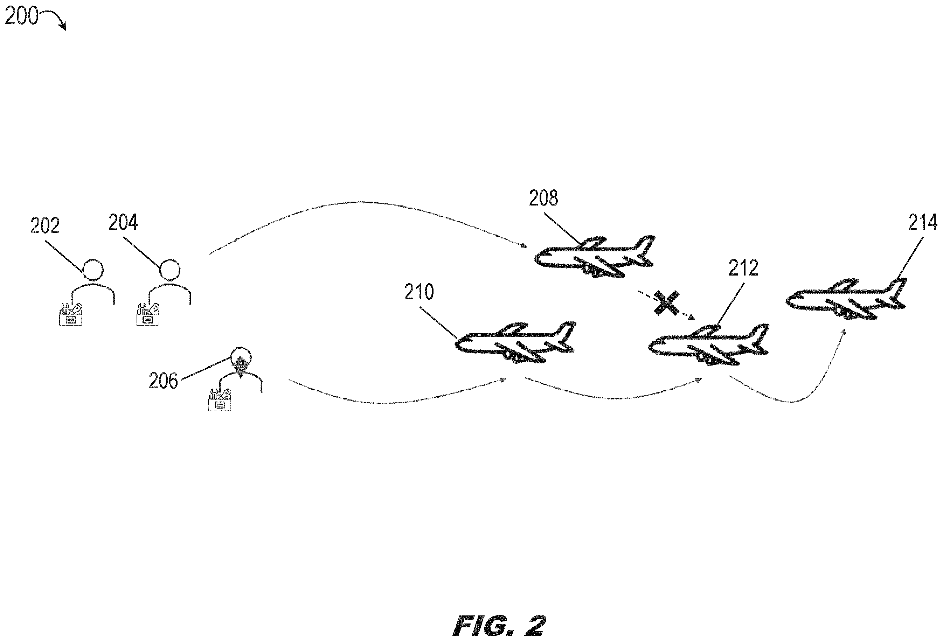

Referring now to FIG. 2, a commercial domain 200 is shown. The commercial domain 200 may include mechanics 202, 204, 206 and commercial aircraft 208, 210, 212, 214.

In embodiments, the commercial domain 200 may be implemented and may operate similarly to the military domain 100 of FIG. 1, except that the commercial domain 200 may incorporate non-military resources (e.g., the mechanics or maintenance workers 202, 204, 206) and non-military tasks (e.g., the repair, restoration, or maintenance of the aircraft 208, 210, 212, 214). For example, the commercial domain 200 may be concerned with the same (or highly similar) ultimate problem as the military domain 100: the assignment of resources, e.g., the mechanics 202, 204, 206, to a particular task or task set, e.g., the maintenance of the aircraft 208, 210, 212, 214. However, the parameters driving determination of a task or task set as complete, and for defining the cost associated with the assignment of one resource to a task as opposed to another, may vary broadly between the military and commercial domains 100, 200. In some embodiments, the commercial domain may include, but is not limited to, one or more of: assigning maintenance workers to maintenance items (as shown by FIG. 2); assigning passenger or cargo aircraft to routes; and/or assigning engineers to projects.

In embodiments, each of the commercial aircraft 208, 210, 212, 214 associated with the commercial domain 200 (e.g., belonging to and/or operated by an airline) may be associated with specific maintenance objectives to be fulfilled in completion of a task providing for the restoration of all aircraft to flight ready status. For example, each aircraft 208, 210, 212, 214 may be associated with a multi-point pre-flight checklist and inspection before the aircraft is cleared to carry passengers or to fly a particular flight plan. Further, the aircraft 210 may include several components, systems, or subsystems in need of repair or replacement prior to passage of the pre-flight inspection.

In embodiments, each mechanic 202, 204, 206 may be associated with a unique set of capabilities, e.g., experience levels, skill sets. For example, the mechanics 202, 204 may be younger maintenance workers with lower experience levels and the mechanic 206 may be highly experienced and diversely skilled. Accordingly, the optimal assignment of the mechanics 202, 204, 206 to the aircraft 208, 210, 212, 214 in the commercial domain 200 may be defined not in terms of lost personnel or aircraft (as with the military domain 100) but in terms of optimal efficiency, e.g., completion of the task or task set in minimal time. For example, the quickest feasible completion of the task/s associated with the aircraft 208, 210, 212, 214 may assign the mechanics 202, 204, 206 so as to prevent or eliminate the need for reassignment of mechanics, e.g., if the maintenance objectives of a particular aircraft 212 are beyond the capabilities (e.g., experience level or skill set) of the mechanics 202, 204.

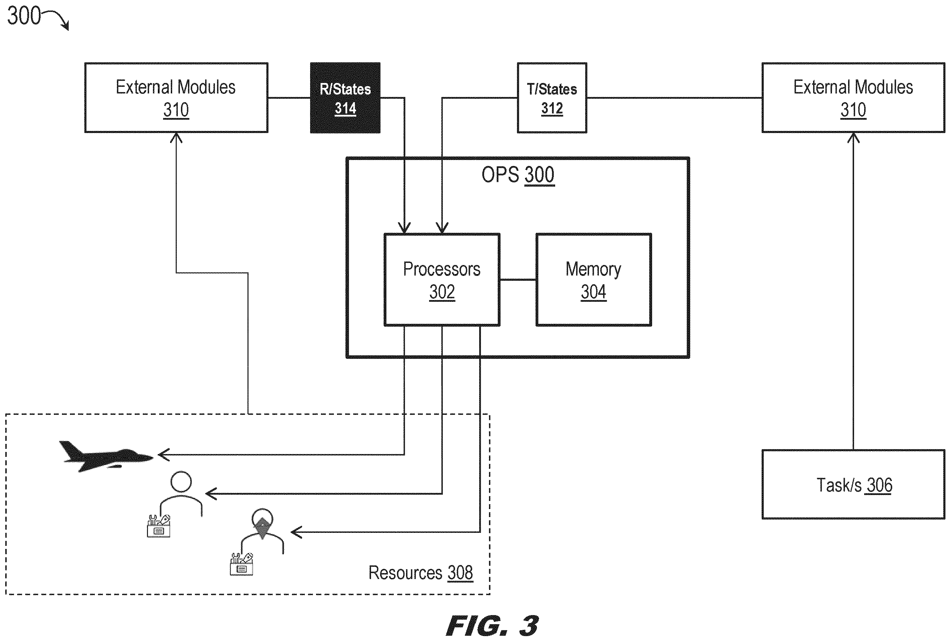

Referring now to FIG. 3, a domain-agnostic operational planning system 300 (OPS) is shown. The OPS 300 may include processors 302 and memory 304 (e.g., or other appropriate data storage). For example, the OPS 300 may include multiple modules configured for execution on a single processor or multi-core processing environment.

In embodiments, the OPS 300 may determine, based on a given task or task set 306 and a known set of resources 308, an optimal assignment or some or all of the known resources for completion of the task set. For example, the OPS 300 may receive (e.g., from external modules 310) updated task states 312 (e.g., task data) and resource states 314 (e.g., resource data). In embodiments, external modules 310 may include distributed data sources external to the OPS 300 that provide the OPS with resource and/or task states (e.g., or aggregate said resource and task states from other distributed sources). For example, in military domains, external modules 310 may provide intelligence with respect to known hostile aircraft and/or specific mission directives; in commercial domains, external modules may provide updated states with respect to maintenance facilities.

In embodiments, task states 312 may provide information to the OPS 300 as to the current completion state of each task 306, e.g., not started, pending, en route, in progress, complete. Further, task states 312 may include, for each task 306, a set of capability requirements specific to that task, including (but not limited to), e.g., the set of resource properties or attributes required to complete the task, how frequently the task may be performed or attempted, and/or a base probability of completing the task. For example, a particular task 306 may require one or more imposed effects on task states 312 in order to complete the task; resource properties and attributes may identify any known resources 308 capable of imposing the required effects. If, for example, the task 306 involves an air-to-air (A2A) engagement, the associated resource properties and/or attributes may enable completion of the task, e.g.., an A2A weapons system with sufficient (non-zero) ordnance and authorization to engage.

Further, task states 312 may include task dependencies. For example, certain tasks 306 may require particular task state requirements of other tasks before the task may be attempted or started (or task states required before the task may be concluded or completed). Further, task states 312 may include positional data, e.g., a position or location where a task 306 is to be performed or completed, relative to other resources 308 or tasks of the task set. Further, task states 312 may include timing data, e.g., how much time remains before a particular task 306 becomes irrelevant (e.g., if not completed by that time), a base time required to perform or attempt a task, a time a particular task has been in progress. Further, task states 312 may include other constraints or details relevant to a particular task 306, e.g., whether completion of the task is required, whether one or more resources 308 may collaborate in fulfillment of the task.

In embodiments, resource states 314 may provide information to the OPS 300 as to the current state of each known resource 308 (e.g., friendly aircraft 102, mechanic 204, senior mechanic 206). For example, resource states 314 may include capabilities for each known resource 308, including (but not limited to) resource properties and/or attributes (e.g., including, as discussed above, task states that may be affected by said properties or attributes), how frequently the resource can exercise a given property or attribute (or, e.g., achieve a particular task state effect), the base probability of the resource completing a particular task 306, and/or other constraints associated with the resource. Further, resource states 314 may include positional data, e.g., a position or location of a particular resource 308 relative to other known resources and/or tasks 306. Further, resource states 314 may include timing data, e.g., a time remaining before the known resource 308 ceases to be useful or assignable. Further, resource states 314 may include a functional state of each known resource 308. Further, resource states 314 may include a collaborative status of each known resource 308, e.g., whether the known resource can collaborate with other resources in performance and/or fulfillment of a task 306.

In embodiments, the OPS 300 may use the current sets of task states 312 and resource states 314, in addition to other derivative parameters determined within the OPS, to assign the set of known resources 308 for completion of the task/s 306 such that the cost of completing the task/s is minimized. For example, the assignment of known resources 308 may include a new assignment, or may replace a prior assignment of the known resources to the task/s 306 (based on, e.g., changes to the task states 312 and/or resource states 314). In embodiments, the OPS 300 may forward instructions or other information based on the current assignment to all known resources 308 or to any known resources affected by the assignment, e.g., friendly aircraft 102, mechanic 204, senior mechanic 206.

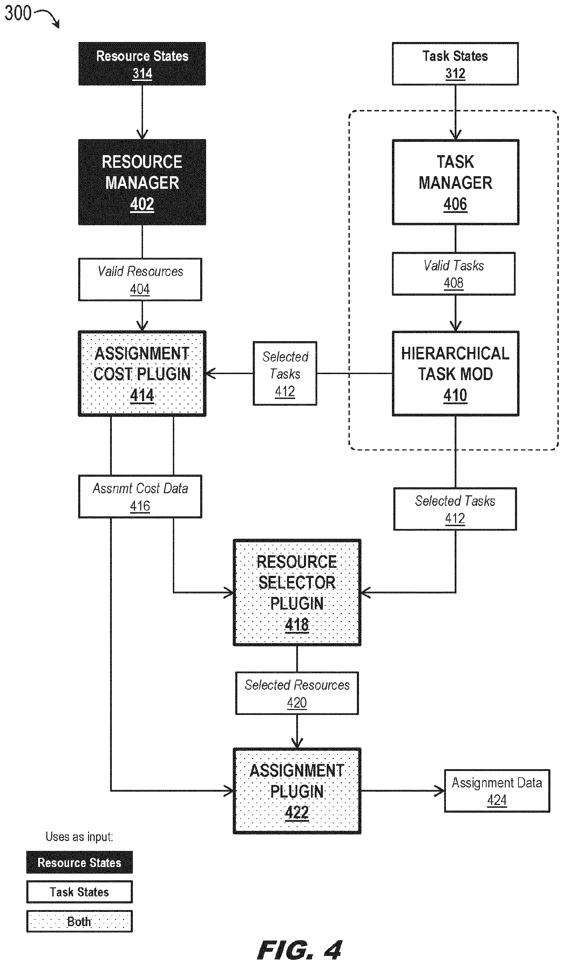

Referring now to FIG. 4, the OPS 300 is shown.

In embodiments, the OPS 300 may incorporate a combination of domain-agnostic non-customizable software modules for implementing functionalities replicable across a broad variety of potential domains and customizable modules, or plugins, adaptable to domain-specific use cases on a plug-and-play basis. Based on current resource states 314 and task states 312 (e.g., representing an updated state set with respect to an ongoing task 306 or task set, or a new task or task set to which no resources 308 have previously been assigned), the OPS 300 may determine an optimal mapping of known resources (or some subset thereof) to a current task or task set such that the task may be completed at minimal cost.

In embodiments, the OPS 300 may include a non-customizable resource manager 402. For example, the resource manager 402 may receive (e.g., from external modules (310, FIG. 3)) and manage resource states 314. The resource manager 402 may preprocess resource states 314 received from known resources (308, FIG. 3) and thereby determine which known resources are valid resources 404 assignable to the current task or set of tasks (306, FIG. 3). For example, the resource manager 402 may assess, for each known resource 308 (or for each known resource for which resource states 314 are provided): current capabilities, attributes, or properties of the resource (e.g., tasks 306 or task objectives performable by the resource, task states 312 affected by said properties or attributes), frequency of fulfilling a particular task via the resource, base probability of completing the task via the resource, any constraints upon the resource), positional data of the resource (e.g., relative to other resources and/or tasks), timing data of the resource (e.g., how much longer the resource may be assignable or useful), functional status of the resource, and/or collaborative status of the resource (e.g., may the resource team or be teamed with other resources to complete a particular task 306). In embodiments, the set of valid resources 404 includes that subset of known resources 308 assignable to the current task 306 or task set.

In embodiments, the OPS 300 may include a non-customizable task manager 406. For example, the task manager 406 may receive (e.g., from external modules 310) and pre-process task states 312, thereby determine which tasks 306 of the current task set are valid tasks eligible for completion. In embodiments, the task manager 406 may assess, for each task 306: current capabilities of the task (e.g., which elements or components are need for completion of the task, which task states 312 may be achieved and/or affected by particular resource properties or attributes, frequency with which the task may be attempted or completed, probability that the task will be attempted or completed, any constraints on the task), completion status of the task (e.g., completed, pending, in progress), task dependencies (e.g., any status requirements tied to other tasks necessary for performance or completion of this task), position data, timing data, whether or not the task is required, collaborative status of the task (e.g., whether multiple resources may team or be teamed in performance or completion of the task). For example, based on the current task states 312, the task manager 406 may select a set of valid tasks 408 eligible for completion.

In embodiments, the OPS 300 may include a non-customizable hierarchical task module 410. In some embodiments, the hierarchical task module 410 may be combined with the task manager 406, in others the hierarchical task module may be separate from the task manager (although the task manager and hierarchical task module are non-customizable and domain-agnostic in all other aspects). For example, the hierarchical task module 410 may resolve any task dependencies associated with the set of valid tasks 408 and thereby select from the set of valid tasks a set of tasks available for assignment, e.g., a set of selected tasks 412 (e.g., assignable tasks).

In embodiments, the OPS 300 includes customizable modules, or plugins, more adaptable and/or tailorable to the current task domain (e.g., the military domain 100 of FIG. 1, the commercial domain 200 of FIG. 2) than the domain-agnostic resource manager 402, task manager 406, and hierarchical task module 410. For example, the OPS 300 may include a customizable assignment cost plugin 414. In embodiments, the assignment cost plugin 414 receives the set of valid resources 404 from the resource manager 402 and the set of selected assignable tasks 412 from the hierarchical task module 410. For example, given all possible assignments (or, e.g., all feasible assignments) of the valid resources 404 to the set of selected assignable tasks 412, the assignment cost plugin 414 may generate assignment cost data 416 representing a cost factor associated with each assignment. In embodiments, the cost of each assignment of valid resources 404 to selected assignable tasks 412 may be based on the amount of time needed for a particular assigned valid resource (e.g., or set of valid resources) to complete a particular assignable task (or, e.g., the probability of that resource or resource set completing the task, or achieving a particular task state required for completion of the task, within a particular time window). In some embodiments, assignment cost data 416 may incorporate additional cost factors as desired and predetermined. For example, assignment cost data 416 may account for capabilities used in the performance of a selected assignable task 412 (required task state effects, resource properties and attributes with respect to achieving the required task state, e.g., number of gallons of fuel required to refuel a particular aircraft), the probability of the assigned valid resources 404 completing the assignable task, when the valid resource/s may perform or attempt the assignable task after it is assigned (e.g., including the satisfaction of any constraints upon the valid resource/s and/or assignable task), whether the valid resource/s may perform or attempt the task, or reasons why the valid resource/s would be assigned to perform or attempt the assignable task. In embodiments, the assignment cost plugin 414 may share assignment cost data 416 downstream with other customizable plugins of the OPS 300.

In embodiments, the OPS 300 may include a customizable resource selector plugin 418. For example, the resource selector plugin 418 may receive the assignment cost data 416 as well as the set of selected assignable tasks 412 selected by the hierarchical task module 410 and/or task manager 406. In embodiments, the resource selector plugin 418 may review the set of valid resources 404, some or all of which may currently be assigned to tasks (if, for example, a task or task set is ongoing). For example, the resource selector plugin 418 may determine, for each valid resource 404 and based on assignment cost data 416, whether that valid resource should 1) stop its current task assignment; 2) continue its current task assignment; or 3) accept a new task assignment. In embodiments, the set of selected resources 420 may reflect these assignment determinations with respect to the set of valid resources 404. In some embodiments, the resource selector plugin 418 may be implemented as an artificial intelligence (Al) decision-making module trained in domain-specific simulations.

In embodiments, the OPS 300 may include a customizable assignment plugin 422. For example, based on the set of selected resources 420 and the assignment cost data 416, the assignment plugin 422 may perform the ultimate assignment of the set of selected resources 420 to the set of selected tasks 412. In embodiments, the assignment plugin 422 may incorporate auction-style algorithms to achieve optimal completion of the selected tasks 412 by the selected resources 420, e.g., at minimal time cost (or additionally according to any other domain-specific parameters previously introduced to the OPS 300, e.g., conservation of personnel, conservation of equipment, conservation of supplies). For example, the resulting assignment data 424 may reflect this optimal assignment. In embodiments, assignment data 424 output by the assignment plugin 422 may further incorporate resource data (e.g., valid resources 404 or selected resources 420 still assignable to other tasks), task data (e.g., valid tasks 408 that can still be assigned resources), timing data for the optimal assignment (e.g., the total time required for completion of the task), probability data for the optimal assignment (e.g., probability of completing this task as assigned, probability of completing all tasks assigned by the assignment data), and/or the original assignment cost data 416.

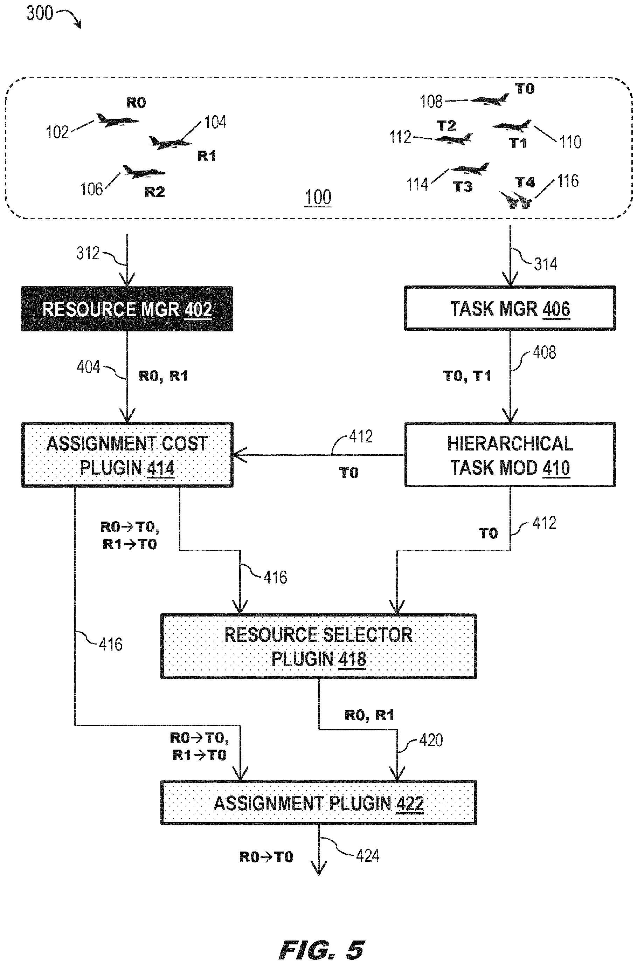

Referring now to FIG. 5, the OPS 300 is shown applied to the military domain 100 of FIG. 1 (including friendly aircraft 102, 104, 106, hostile aircraft 108, 110, 112, 114, and hostile ground-based weapons 116). With respect to FIG. 5, the friendly aircraft 102, 104, 106 shall be referred to as known resources R0, R1, and R2 respectively. Similarly, engagement with the hostile aircraft 108, 110, 112, 114 and hostile ground-based weapons 116 shall be referred to as tasks T0, T1, T2, T3, and T4 respectively.

In embodiments, the resource manager 402 may receive resource states 312 associated with the known resources R0, R1, R2. Similarly, the task manager 406 may receive task states 314 associated with the tasks T0, T1, T2, T3, T4 in fulfillment of the current/ongoing mission. For example, the resource manager 402 may determine, based on the resource states 312, that resource R2 may not have sufficient fuel to remain useful for the duration of the mission. Accordingly, the set of valid resources 404 sent downstream by the resource manager 402 may include only resources R0 and R1.

In embodiments, the task manager 406, based on the current task states 314, that tasks T2, T3, T4 are not within the operating range of the resources R0, R1, R2 and thus not of concern to the current mission. Accordingly, the set of valid tasks 408 sent to the hierarchical task module 410 may include only the tasks T0 and T1. Further, the hierarchical task module 410 may resolve task dependencies associated with T0 and T1 and determine that task T1 is not an immediate priority (e.g., the hostile aircraft 110 is not an immediate threat). Accordingly, the set of selected tasks 412 sent downstream (e.g., to the assignment cost plugin 414 and resource selector plugin 418) may solely include the task T0 (e.g., engagement of the hostile aircraft 108).

In embodiments, the assignment cost plugin 414 may, given the set of valid resources 404 (e.g., resources R0 and R1) and the set of selected tasks 412 (e.g., task T0) may determine the cost of assigning R0 and R1 to the task T0 (based on, e.g., the fuel levels, current positions, and/or pilot experience levels associated with R0 and R1, among other factors) and provide assignment cost data 416 corresponding to the possible **R0→T0** and **R1→T0** assignments.

In embodiments, the resource selector plugin 418 may, based on the set of valid resources 404 (R0, R1) and the set of selected tasks 412 (T0) to mobilize all available resources for task assignments. Accordingly, the resource selector plugin 418 may instruct resources R0 and R1 to stop their current assignments and/or accept new task assignments (e.g., if a task is assigned them) and the set of selected resources 420 will include both valid resources 404, e.g., R0 and R1.

In embodiments, based on assignment cost data 416 the assignment plugin 422 may decide (e.g., via auction-style algorithms) which of the selected resources 420 (R0, the friendly aircraft 102, or R1, the friendly aircraft 104) will be assigned to task T0 (engagement of the hostile aircraft 108). For example, the assignment plugin 422 may assign resource R0 (friendly aircraft 102) to task T0 (engagement of hostile aircraft 108) based on a lower overall assignment cost. In embodiments, the resulting assignment data 424 output by the OPS 300 (e.g., via the assignment plugin 422) may reflect the optimal assignment of resource R0 to task TO (e.g., in addition to other relevant data as noted above).

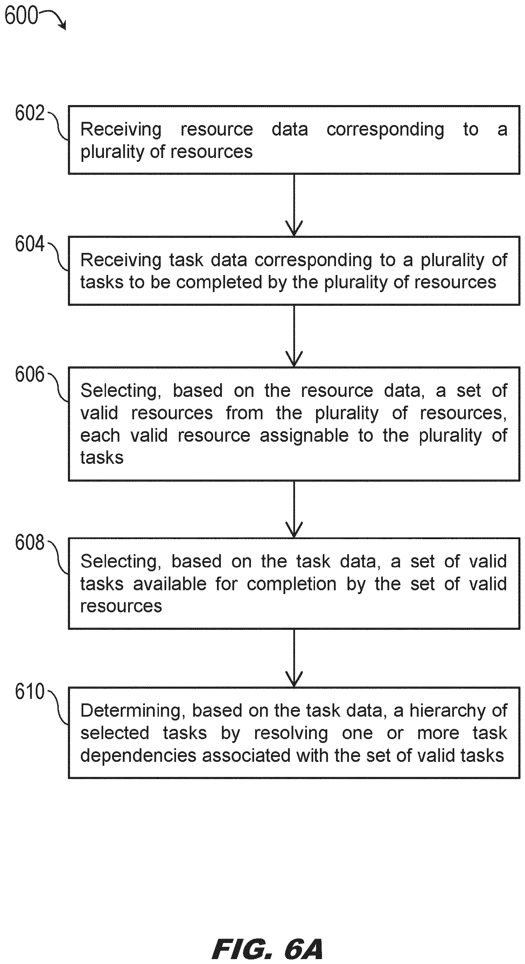

Referring now to FIG. 6A, the method 600 may be implemented by the OPS 300 and may include the following steps.

At a step 602, the OPS resource manager receives current resource states (e.g., resource data) associated with a set of known resources, e.g., friendly aircraft, maintenance workers or mechanics, or any other military, commercial, or civilian resources assignable or deployable by the OPS for the completion or fulfillment of tasks or task sets. For example, resource states may include, for each of a set of known resources: capabilities of the resource; position data of the resource (e.g., relative to other resources or tasks); timing data of the resource (e.g., how much longer the resource will be useful or assignable); whether the resource is functional; and/or whether the resource can collaborate with other resources. Further, resource capabilities may include attributes or properties of the resource (e.g., the ability of the resource to complete a task, the effects upon task states provided by the resource), a frequency with which the resource may perform a particular task, a base probability that the resource completes a particular task, and/or constraints on the resource.

At a step 604, the OPS task manager receives task states (e.g., task data) associated with a task or set of tasks to be completed (e.g., in fulfillment of a larger mission). For example, task states may include, for each task: task capabilities; task completion status (e.g., completed, in progress, pending); task dependencies (e.g., necessary task states tied to other task before the task can complete); task positional data (e.g., relative to other tasks or resources); task timing data; whether the task is required; and/or whether multiple resources may collaborate in fulfillment or completion of the task. Task capabilities may include components or other things required for task completion (e.g., necessary effects upon task states for completion of the task, and the associated resource properties or attributes capable of producing said necessary effects), a frequency with which the task may be performed, a probability of the task being performed, and/or constraints on the task.

At a step 606, the OPS resource manager selects from the set of known resources a set of valid resources, including any resources assignable to the current task or task set based on their current capabilities and/or states.

At a step 608, the OPS task manager selects from the set of task states a set of valid tasks available for assignment and completion.

At a step 610, the OPS hierarchical task module determines a hierarchy of selected tasks by resolving any task dependencies associated with the set of valid tasks.

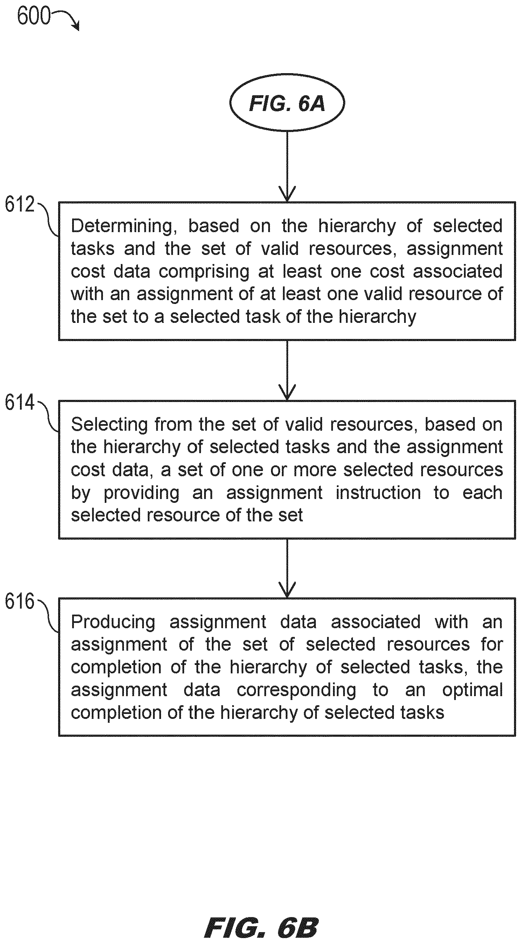

Referring also to FIG. 6B, at a step 612 the OPS customizable assignment cost plugin determines, based on the hierarchy of selected tasks and the set of valid resources, assignment cost data representing a cost factor for any possible or feasible assignment of one or more valid resources to a selected task or task set from the hierarchy. For example, assignment cost data may include, for any possible or feasible assignment, a probability of completion of the selected task by the valid resource/s; capabilities associated with performance of the selected task; timing data for the performance of the selected task; an indicator of whether the selected task is performable by that resource or resources; and/or a rationale for why the particular valid resource/s would be assigned to, or would complete, the selected task.

At a step 614, the OPS customizable resource selector plugin produces a set of selected resources by providing assignment instructions to each valid resource based on the assignment cost data. For example, each valid resource may be instructed to continue its current task assignment, terminate its current task assignment, or accept a new task assignment (if a task is ultimately assigned).

At a step 616, the OPS customizable assignment plugin determines, based on the assignment cost data, an optimal assignment of the selected resources for completion of the selected task/s. For example, the optimal assignment may be based on lowest overall cost or other additional parameters, and included in output assignment data that may also include other related datasets, e.g., the assignment cost data itself and/or other resources and tasks which may still be eligible for assignment. In some embodiments, the assignment plugin uses auction-based algorithms to achieve an optimal mapping of selected resources to selected tasks.

### CONCLUSION

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. An operational planning system, comprising:
a memory (304) configured for storage of processor-executable encoded instructions;
and
a processing environment operatively coupled to the memory (304) and comprising:
one or more processors configurable by the encoded instructions;
and
one or more modules (310) executable on the one or more processors, the one or more modules (310) configured for assignment of a plurality of resources for optimal completion of a plurality of tasks, the one or more modules (310) comprising:
a resource manager (402) configured to:
receive resource data associated with the plurality of resources;
and
select from the plurality of resources, based on the resource data, a set of one or more valid resources assignable to the plurality of tasks;
a task manager (406) configured to:
receive task data associated with the plurality of tasks;
select from the plurality of tasks a set of one or more valid tasks available for completion by the set of valid resources;
resolve one or more task dependencies associated with the set of valid tasks;
and
select from the set of valid tasks, based on the resolved task dependencies, a hierarchy of selected tasks available for assignment;
and
one or more customizable modules (310), comprising:
an assignment cost module configured to:
receive the hierarchy of selected tasks and the set of valid resources;
determine assignment cost data comprising at least one cost associated with an assignment of at least one valid resource of the set to a selected task of the
hierarchy;
a resource selector module configured to:
receive the hierarchy of selected tasks and the assignment cost data;
and
select from the set of valid resources a set of one or
more selected resources by providing an assignment
instruction to each selected resource of the set;
and
an assignment module configured to:
receive the set of selected resources, the hierarchy of selected tasks, and the set of assignment cost data;
and
produce assignment data associated with an assignment of the set of selected resources to the hierarchy of selected tasks, the assignment data corresponding to the optimal completion of the hierarchy of selected tasks.

2. The operational planning system of Claim 1, wherein the resource data includes, for at least one first resource of the plurality of resources, one or more of:
an attribute or property associated with the first resource;
positional data associated with the first resource, the positional data relative to at least one of a second resource of the plurality of resources or a task of the plurality of tasks;
timing data associated with the first resource;
a functional status of the first resource;
or
a collaborative capacity of the first resource.

3. The operational planning system of Claim 2, wherein the attribute or property associated with the first resource includes at least one of:
a task objective or task state effect achievable by the first resource;
a frequency associated with an achievement of the task objective or task state effect;
a base probability of completion of a task of the plurality of tasks by the first resource;
or
a resource constraint associated with the first resource, and/or wherein the timing data associated with the first resource includes at least one of:
a remaining functional time of the first resource;
or
a remaining assignable time of the first resource.

4. The operational planning system of any preceding Claim, wherein the task data includes, for at least one first task of the plurality of tasks, one or more of:
a capability associated with the first task;
a completion status of the first task;
a task dependency associated with the first task;
positional data associated with the first task, the positional data relative to at least one of a second task of the plurality of tasks or a resource of the plurality of resources;
timing data associated with the first task;
a required status of the first task;
or
a collaborative capacity of the first task.

5. The operational planning system of Claim 4, wherein the task dependency corresponds to at least one necessary task state associated with a second task of the plurality of tasks, the at least one necessary task state required for at least one of 1) commencement of the first task or 2) completion of the first task, and/or wherein the capability associated with the first task includes one or more of:
a task state effect required for completion of the first task;
a frequency with which the first task may be performed;
a probability of the first task being performed;
or
a task constraint associated with the first task.

6. The operational planning system of any preceding Claim, wherein the assignment cost data includes, for at least one assignment of at least one valid resource to a selected task:
a probability of completion of the selected task by the at least one valid resource;
a capability associated with a performance of the selected task by the at least one valid resource;
timing data associated with the performance of the selected task by the at least one valid resource;
an indicator of whether the selected task is performable by the at least one valid resource;
or
a rationale associated with the performance of the selected task by the at least one valid resource.

7. The operational planning system of any preceding Claim, wherein the assignment instruction is selected from a group including:
an instruction to stop a current task assignment;
an instruction to continue a current task assignment;
and
an instruction to receive a new task assignment.

8. The operational planning system of any preceding Claim, wherein the assignment data includes one or more of:
a mapping of at least one selected resource of the set of selected resources to a selected task of the hierarchy of selected tasks;
one or more assignable resources of the set of selected resources, each assignable resource mappable to a selected task;
one or more assignable tasks of the hierarchy of selected tasks, each assignable task capable of accepting mapped selected resources;
timing data associated with a completion of each selected task by its mapped selected resources;
probability data associated with a completion of each selected task by its mapped selected resources;
or
the set of assignment cost data, and optionally wherein the probability data includes one or more of:
a probability of the completion of each selected task by its mapped selected resources;
or
a probability of the completion of the hierarchy of selected tasks.

9. The operational planning system of any preceding Claim, wherein:
the resource selector module is configured by artificial intelligence training according to one or more simulations of the plurality of tasks.

10. The operational planning system of any preceding Claim, wherein:
the assignment module is configured to produce the optimal assignment of the set of selected resources to the hierarchy of selected tasks according to one or more auction algorithms.

11. A computer-assisted method for assignment of a set of resources for optimal completion of a set of tasks, the method comprising:
receiving resource data corresponding to a plurality of resources;
receiving task data corresponding to a plurality of tasks to be completed by the plurality of resources;
selecting, based on the resource data, a set of valid resources from the plurality of resources, each valid resource assignable to the plurality of tasks;
selecting, based on the task data, a set of valid tasks available for completion by the set of valid resources;
determining, based on the task data, a hierarchy of selected tasks by resolving one or more task dependencies associated with the set of valid tasks;
determining, based on the hierarchy of selected tasks and the set of valid resources, assignment cost data comprising at least one cost associated with an assignment of at least one valid resource of the set to a selected task of the hierarchy;
selecting from the set of valid resources, based on the hierarchy of selected tasks and the assignment cost data, a set of one or more selected resources by providing an assignment instruction to each selected resource of the set;
and
producing assignment data associated with an assignment of the set of selected resources for completion of the hierarchy of selected tasks, the assignment data corresponding to an optimal completion of the hierarchy of selected tasks.

12. The method of Claim 11, wherein receiving resource data corresponding to a plurality of resources includes receiving, for at least one first resource of the plurality of resources, one or more of:
an attribute or property associated with the first resource;
positional data associated with the first resource, the positional data relative to at least one of a second resource of the plurality of resources or a task of the plurality of tasks;
timing data associated with the first resource;
a functional status of the first resource;
or
a collaborative capacity of the first resource, and optionally wherein receiving an attribute or property of the first resource includes receiving at least one of:
a task objective or task state effect achievable by the first resource;
a frequency associated with an achievement of the task objective or task state effect;
a base probability of completion of a task of the plurality of tasks by the first resource;
or
a resource constraint associated with the first resource.

13. The method of Claim 11 or 12, wherein receiving task data corresponding to a plurality of tasks to be completed by the plurality of resources includes receiving, for at least one first task of the plurality of tasks, one or more of:
a capability associated with the first task;
a completion status of the first task;
a task dependency associated with the first task;
positional data associated with the first task, the positional data relative to at least one of a second task of the plurality of tasks or a resource of the plurality of resources;
timing data associated with the first task;
a required status of the first task;
or
a collaborative capacity of the first task and wherein receiving a capability associated with the first task includes receiving one or more of:
a task state effect required for completion of the first task;
a frequency with which the first task may be performed;
a probability of the first task being performed;
or
a task constraint associated with the first task.

14. The method of any of Claims 11 to 13, wherein determining, based on the hierarchy of selected tasks and the set of valid resources, assignment cost data includes determining, for at least one assignment of at least one valid resource to a selected task, one or more of:
a probability of completion of the selected task by the at least one valid resource;
a capability associated with a performance of the selected task by the at least one valid resource;
timing data associated with the performance of the selected task by the at least one valid resource;
an indicator of whether the selected task is performable by the at least one valid resource;
or
a rationale associated with the performance of the selected task by the at least one valid resource.

15. The method of any of Claims 11 to 14, wherein producing assignment data associated with an assignment of the set of selected resources for completion of the hierarchy of selected tasks includes producing one or more of:
a mapping of at least one selected resource of the set of selected resources to a selected task of the hierarchy of selected tasks;
one or more assignable resources of the set of selected resources, each assignable resource mappable to a selected task;
one or more assignable tasks of the hierarchy of selected tasks, each assignable task capable of accepting mapped selected resources;
timing data associated with a completion of each selected task by its mapped selected resources;
probability data associated with a completion of each selected task by its mapped selected resources;
or
the set of assignment cost data.
